# EUROPEAN PATENT SPECIFICATION

(11) **EP 2 091 633 B1**
(45) Date of publication and mention of the grant of the patent: **09.01.2013**
(21) Application number: 07831599.1
(22) Date of filing: 06.11.2007
(51) Int. Cl.: B01D 53/22, B01D 63/06, B01D 69/12, B01D 71/02, B01D 67/00

(54) **METHOD FOR MANUFACTURING A SEPARATION MEMBRANE-POROUS MATERIAL COMPOSITE**
HERSTELLUNGSVERFAHREN FÜR EINEN VERBUND AUS TRENNMEMBRAN UND PORÖSEM MATERIAL
PROCÉDÉ DE FABRICATION D'UNE COMPOSITE MEMBRANE DE SÉPARATION ET MATÉRIAU POREUX

(30) Priority: 06.11.2006 JP 2006299988
(43) Date of publication of application: 26.08.2009
(73) Proprietor: NGK Insulators, Ltd., Nagoya-shi, Aichi 467-8530 (JP)
(72) Inventor: ICHIKAWA, Akimasa, Nagoya-shi Aichi 4678530 (JP); TAKENO, Shogo, Nagoya-shi Aichi 467-8530 (JP); NONOKAWA, Masami, Nagoya-shi Aichi 467-8530 (JP)
(74) Representative: Paget, Hugh Charles Edward
(86) International application number: PCT/JP2007/071869
(87) International publication number: WO 2008/056803

(56) References cited:
- EP-A- 1 258 283
- WO-A-01/97956
- WO-A-95/03885
- WO-A-2005/087355
- WO-A1-01/53005
- JP-A- 2002 066 280
- US-A- 5 782 959
- US-A- 5 980 989
- US-A1- 2005 013 933

## Description

### Technical Field

The present invention relates to a method for manufacturing a separation membrane-porous material composite having a porous material and a separation membrane formed on a surface of the porous material.

### Background Art

There is a technical demand for selective separation of a specific substance (e.g., gas) from a mixture of a plurality of substances (e.g., gas) at the molecule level. As filters to meet the demand, there have generally been known filters which employ polysulfone, silicon, polyamide, polyimide, or the like for a separation membrane.

However, since separation membranes of these materials are of polymer resins, there is a problem of limited mixture subjected to separation because the film easily changes in quality and deteriorates when an organic solvent is contained in the mixture.

Therefore, in recent years, there has been proposed a filter having a carbon film as a separation membrane formed on a porous material (porous substrate) as a filter excellent in chemical stability and thermal resistance (see Japanese Patent No. 3647985).

However, a filter actually manufactured by forming a carbon film on a surface of a porous material is not satisfactory with regard to a flux and selectivity (separation factor α) , showing the necessity of improvement.

Generally, improving the selectivity with maintaining the flux, improving the flux with maintaining the selectivity, and improving both the flux and selectivity are always aims. It was found that, particularly when a carbon film is formed on a porous material by an immersion method, the carbon film is formed thick, and thereby a flux tends to decrease.

In addition, as disclosed in Japanese Patent No. 3647985, in a method of impregnating the surface of the porous material (porous substrate) with silica sol and forming a carbon film thereon, a pore diameter of the carbon film increases due to formation of a sol layer. Therefore, selectivity is improved with respect to some substances (e.g., gas) having a molecular diameter of 0.43 nm or more and a relatively high molecular weight such as C₃H₈/C₃H₆. However, it has been found that selectivity easily deteriorates with respect to a substance having a relatively small molecular weight such as CO₂/CH₄, N₂/O₂, and water/EtOH, which are industrially useful. In addition, a low flux by the influence of pressure loss due to silica sol has been recognized.
JP 2002 066280 describes a carbonaceous gas separation film, which permeates only specific gas and contains 70 wt.% or more of carbon, formed on the surface of a ceramic porous support. An intermediate layer comprising a ceramic with a mean pore size of 1-10 nm is formed between the ceramic porous support and the carbonaceous gas separation film to manufacture a gas separation filter.
WO 2005/087355 describes a carbon film laminate having a porous substrate composed of a plurality of particles and a carbon film formed on the surface thereof, wherein the porous substrate comprises a surface layer adjacent to the carbon film and composed of particles having an average particle diameter of 0.01 to 0.11 µm and a porous article composed of particles having an average particle diameter different from that of particles constituting the surface layer.
WO 95/03885 describes a reactive membrane for removing impurities, such as water, oxygen, organic compounds, and metallic compounds from a gas. The reactive membrane includes a porous substrate and at least one carbon layer, which is modified to present active sites, deposited on the porous substrate. The active sites include metal species which are at least partially deoxygenated and are chemically bonded to the carbon layer. Methods of forming the reactive membrane, of activating and regenerating the active sites, and of removing impurities from a gas with the membrane are also described.
WO 01/97956 describes nanoporous carbon membranes which have been synthesized by pyrolysis of selected polymers on porous substrates to produce thin mixed matrix carbon film with pores for separation of small molecules.
US 5,782,959 describes a process for preparing a composite inorganic membrane for hydrogen separation, more specifically, a process for preparing a composite inorganic membrane for hydrogen separation which comprises formation of intermediate layer in an asymmetric porous alumina support by sol-gel method, and modification of pores of the alumina membrane by soaking palladium acetate solution into the pores and vapor-deposition to enhance the permeability and selectivity for hydrogen. The process for preparing an inorganic membrane for hydrogen separation comprises the steps of: (i) dip-coating an alumina support in alumina sol containing a palladium precursor which is uniformly dispersed while vacuumizing the inside of the support, to form an intermediate layer of thin palladium impregnated alumina membrane; (ii) soaking the membrane obtained in step (i) in the palladium precursor solution, drying it under vacuum for 2 to 4 hours, and vaporizing the soaked materials with the gradual increase of temperature up to 170°C to 190°C for the vaporized palladium precursor to be deposited onto the pores; and (iii) heating the alumina membrane whose pores are deposited with palladium at 290°C to 310°C while vacuumizing the inside of the support.
EP 1 258 283 describes a reforming device that generates fuel gas for fuel cells by decomposing hydrocarbon compounds such as natural gas and then using a hydrogen separation composite to selectively transmit hydrogen. A porous support medium made of ceramics is formed, and a hydrogen separation metal is supported in the pores so as to fill the inside of the support medium. It is also possible to support a reforming catalyst. High pressure gas is supplied to the hydrogen extraction side, and the total pressure is made higher than the pressure on the raw material gas supply side without making the hydrogen partial pressure higher.
US 2005/013933 describes a method of forming a composite structure for an ion transport membrane in which a filler substance is applied to one surface of a porous support layer in order to plug pores and prevent coated ion conducting material from penetrating the pores to reduce the amount of gas diffusion. Prior to coating of the surface with layers that may be oxygen ion conducting layers, excess filler substance is removed. After the coating of the one surface, the filler substance is removed from pores.
WO 01/53005 describes a method for the preparation of metal/porous substrate composite membranes by flowing a solution of metal to be plated over a first surface of a porous substrate and concurrently applying a pressure of gas on a second surface of the porous substrate, such that the porous substrate separates the solution of metal from the gas.
US 5,980,989 describes a gas separator in which a metal for separating a gas is filled into pores opened on the surface of a porous substrate to close them. The thus constituted gas separator can prevent a material gas from leaking into a purified gas. A method for preparing the gas separator is also described which comprises an activation step of immersing the porous substrate having a pair of surfaces in a solution containing an activated metal, while a pressure difference is set between the pair of surfaces, and a chemical plating step of filling the metal for separating the gas into the pores opened on the surface of the porous substrate to close these pores by chemical plating.

### Disclosure of the Invention

The present invention has been made in view of the aforementioned circumstances and aims to provide a means for obtaining a filter having porous material and a separation membrane (molecular sieve carbon film) thereon and having an improved flux and selectivity in comparison with conventional filters. As a result of repeated study, it has been found out that the above problem can be solved by forming a separation membrane on a surface of a porous material under specific conditions in a production process of a separation membrane-porous material composite (applicable to a filter), which led to the completion of the present invention.

Described herein is a separation membrane-porous material composite comprising a porous material and a separation membrane formed on a surface of the porous material, wherein a composite layer having a thickness of 1 mm or less is provided as an under layer for the separation layer at an interface between the porous material and the separation membrane, and at least a part of the composite layer is made of same material as a material for the separation layer.

The composite layer in the present specification means a layer formed in such a manner that a solution of a precursor for a separation membrane is made to be penetrated into a part of the porous material, especially a part of the dense layer while applying pressure to the inside of pores in the porous material so as to form a layer wherein a material for a separation membrane layer is mingled, desirably in a homogeneous state as much as possible, with the material for the porous material at the interface between the porous material and the separation membrane when the separation membrane is finally formed on the porous material. That is, the composite layer means a portion where both the material constituting a porous material and the material for the separation membrane are present in a mingled state at the interface between the porous material and the separation membrane.

In a separation membrane-porous material composite described herein, the composite layer has a thickness of preferably 500 or less, more preferably 0.01 to 500 µm , further more preferably 100 µm or less, and particularly preferably 0.01 to 10 µm.

In a separation membrane-porous material composite described herein, the porous material preferably has a monolithic shape.

In a separation membrane-porous material composite described herein (not of the present invention), the separation membrane is preferably a molecular sieve carbon film.

Also described herein is ceramic filter constituted by one of the aforementioned separation membrane-porous material composite bodies and capable of separating water from ethanol. In addition, there is provided a ceramic filter constituted by one of the aforementioned separation membrane-porous material composite bodies and capable of separating a gas mixture of, for example, oxygen and nitrogen, or the like, besides a liquid mixture of water and ethanol, or the like, at the molecule level.

According to the present invention, there is provided a method as set out in claim 1. The method is for manufacturing a composite comprising a porous material and a separation membrane (which is a molecular sieve carbon film) formed on a surface of the porous material, wherein, after the porous material is prepared, the porous material is subjected to a step of bringing a solution of a precursor which becomes the separation membrane later into contact with a surface of the porous material at least once under applying pressure on an inside of pores of the porous material so as to keep the thickness of the composite layer at the predetermined level.

In a method for manufacturing the separation membrane-porous material composite of the present invention, it is preferable that the contact in the aforementioned step is conducted by immersing the porous material in the solution of a precursor which becomes the separation membrane later (immersion method).

In a method for manufacturing the separation membrane-porous material composite of the present invention, it is also preferable that the pressure is applied by supplying pressurized gas into the pores of the porous material.

In a method for manufacturing the separation membrane-porous material composite of the present invention, the pressure is preferably 1 to 1000 kPa, more preferably 10 to 500 kPa, and particularly preferably 50 to 100 kPa.

A method for manufacturing the separation membrane-porous material composite of the present invention is suitably used in the case that the porous material has a monolithic shape.

In the method for manufacturing the separation membrane-porous material composite of the present invention the separation membrane is a molecular sieve carbon film.

Described herein is a method for forming the separation membrane on a surface of the porous material, wherein the method includes a step of bringing a solution of the separation membrane or a solution of a precursor which becomes the separation membrane later into contact with a surface of the porous material in a state that pressure of 1 to 1000 kPa is applied on the inside of the pores of the porous material by supplying pressurized gas into the pores.

Since a composite layer formed at the interface between the porous material and the separation membrane has a thickness of 1 mm or less in a separation membrane-porous material composite the entire thickness of the separation membrane including the composite layer portion is thin in comparison with separation membrane-porous material composite bodies conventionally present as various kinds of filters. Since a composite layer has a small effective area of a separation membrane, it has particularly large pressure loss. Further, since a conventional filter has large pressure loss because the composite layer portion is thick. Therefore, a filter where a separation membrane-porous material composite of the present invention is employed has a small pressure loss in total and a high flux upon separation of a mixture.

In a method for manufacturing a separation membrane-porous material composite of the present invention, the porous material is subjected to a step of bringing a solution of a precursor which becomes the separation membrane later into contact with a surface of the porous material at least once in a state that pressure is applied to the inside of pores of the porous material. When the solution of a precursor which becomes the separation membrane later is brought into contact with a surface of the porous material, the inside of the pores of the porous material is in a pressurized state. Therefore, the solution for a precursor (hereinafter sometimes referred to as precursor solution) hardly penetrates into the pores from the surface of the porous material, and almost all the precursor solution remains on the surface of the porous material and forms a separation membrane with formation of a quite thin composite layer at the interface therebetween. Therefore, according to a method for manufacturing a separation membrane-porous material composite of the present invention, a very thin composite layer having a uniform thickness can be formed at the interface between the porous material and the separation membrane. Also, the entire separation membrane including a composite layer portion compositely formed with the porous material can have a uniform thickness and can be made thin, of course, in comparison with a separation membrane manufactured without pressurizing the inside of the pores of the porous material.

In addition, in a method for manufacturing a separation membrane-porous material composite of the present invention, since the entire separation membrane including the composite layer can be formed thin, just a small amount of the precursor solution used for forming the separation membrane is required.

Further, in a method for manufacturing a separation membrane-porous material composite of the present invention, it is possible to employ an immersion method where a porous material is immersed in a precursor solution which becomes a separation membrane later as a preferable mode. Even by this method, the separation membrane is not formed thick on a surface of the porous material not to generate a factor of decrease in flux.

Even by a method for forming a separation membrane on a surface of a porous material of the present invention, an effect similar to that by a method for manufacturing a separation membrane-porous material composite of the present invention by penetrating the precursor while applying pressure to the pores in the porous material can be obtained. That is, a method for forming a separation membrane on a surface of a porous material of the present invention is included as an embodiment for the method for manufacturing a separation membrane-porous material composite of the present invention.

A method for forming a separation membrane on a surface of a porous material of the present invention and a method for manufacturing a separation membrane-porous material composite of the present invention exhibit an excellent effect in that a separation membrane-porous material composite of the present invention can be obtained.

Since a separation membrane-porous material composite of the present invention manufactured by employing a method for forming a separation membrane on a surface of a porous material of the present invention or a method for manufacturing a separation membrane-porous material composite of the present invention is manufactured with applying pressure into the pores of the porous material to control the penetration of a precursor solution into the pores from the surface of the porous material, the entire separation membrane including a composite layer portion is thin and has a uniform thickness. Therefore, the separation membrane-porous material composite of the present invention is excellent in selectivity in addition to a high flux as described above.

If a composite having a porous material and a separation membrane formed on a surface of the porous material (separation membrane-porous material composite) is manufactured by a conventional method, for example, the immersion method where pressure is not applied into pores of the porous material instead of using a method for forming a separation membrane on a surface of a porous material of the present invention or a method for manufacturing a separation membrane-porous material composite of the present invention, the precursor solution which becomes a separation membrane later penetrates into pores from the surface of the porous material. As a result of having a difference caused by concave-convex surface of the porous material in the extent of the penetration, sometimes, a separation membrane having a uniform thickness cannot be formed. A filter using such a separation membrane-porous material composite has deteriorated separation performance at any cost. However, according to a separation membrane-porous material composite manufactured by a method for forming a separation membrane on a surface of a porous material of the present invention or a method for manufacturing a separation membrane-porous material composite of the present invention, such a problem is not caused, and a filter having a satisfactory flax and satisfactory selectivity can be obtained.

A separation membrane-porous material composite manufactured by a method for forming a separation membrane on a surface of a porous material of the present invention or a method for manufacturing a separation membrane-porous material composite of the present invention can have a film having a uniform thickness without forming a sol layer as disclosed in Japanese Patent No. 3647985. Therefore, it can exhibits high selectivity even for a series having relatively small molecular weight and industrially high usability such as CO₂/CH₄ N₂/O₂, and H₂O/EtOH Since there is no influence of pressure loss due to a sol layer, a flux is also high. In addition, even in the case of forming a separation membrane on a sol layer, by employing a method for forming a separationmembrane on a surface of a porous material of the present invention or a method for manufacturing a separation membrane-porous material composite of the present invention, components of the separation membrane is inhibited from penetrating into a sol layer, and thereby a high flux can be obtained.

### Brief Description of the Drawings

[Fig. 1] Figure 1 is a block diagram showing the entire machinery and tools of an apparatus used for forming a carbon film.
[Fig. 2] Figure 2 is a detailed view showing the inside of the container of the apparatus shown in Figure 1.
[Fig. 3] Figure 3 is a photograph showing a cross-section of the porous material in Example (Comparative Example 1).
[Fig. 4] Figure 4 is a photograph showing a cross-section of the porous material in Example (Example 1).
[Fig. 5] Figure 5 is a perspective view showing the whole of an embodiment of a separation membrane-porous material composite.
[Fig. 6] Figure 6 is a schematic view showing an enlarged part of a cross-section of the inner wall of a cell of an embodiment of a separation membrane-porous material composite.

### Explanation on numeral references

1: separation membrane-porous material composite, 2: partition wall, 15 & 16: end face, 17: peripheral face, 20: container, 22: sealant, 23: packing, 24: pressurized gas, 25: precursor solution, 26: tank, 27: regulation valve, 28: pump, 61: porous material, 62: substrate, 63: inter mediate layer, 64: dense layer, 65: composite, 66: carbon film.

### Best Mode for Carrying out the Invention

Hereinbelow, embodiments of the present invention will be described with referring to drawings. However, the present invention is by no means limited to these embodiments, and various changes, modifications, improvements, and replacements may be added thereto on the basis of those skilled in the art. For example, the drawings show preferable embodiments of the present invention. However, no restriction is imposed on the present invention by embodiments shown by the drawings or information shown in the drawings. Upon carrying out or inspecting the present invention, a means similar or equivalent to that described in the present specification can be employed. However, a preferable and suitable means is as follows:

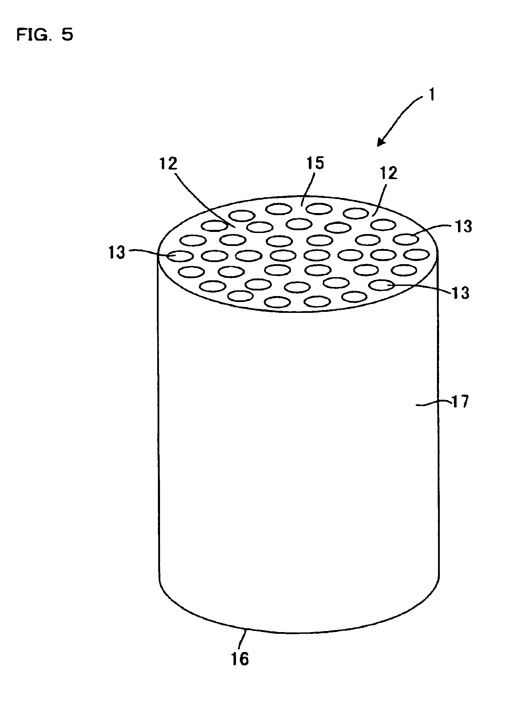

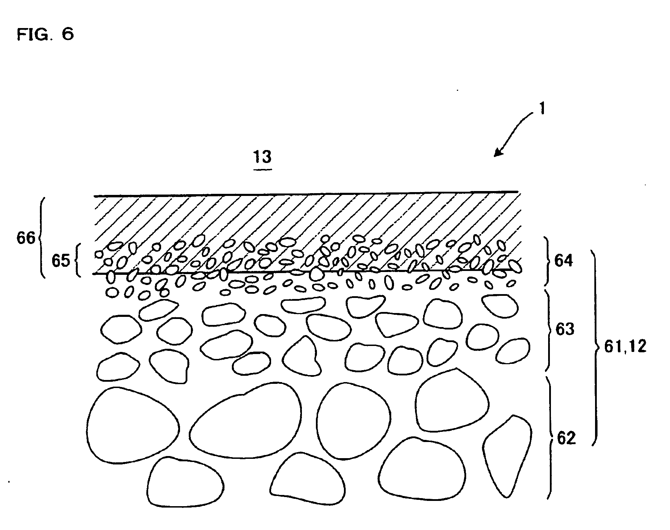

First, a separation membrane-porous material composite will be described. Figs. 5 and 6 are views showing an embodiment of a separation membrane-porous material composite. Fig. 5 is a perspective view showing the whole, and Fig. 6 is a schematic view showing an enlarged part of a cross-section of an inner wall of a cell.

The separation membrane-porous material composite 1 shown in Fig. 5 has a cylindrical outer shape as a whole and a monolithic shape (lotus root-like shape) having a plurality of cells 13 constituting fluid passages in the axial direction. Each of the cells 13 divided by the partition walls 12 which are porous bodies 61 has a circular cross-section perpendicular to the axial direction. On the inner wall surfaces of the cells 13 are formed carbon films 66 of molecular sieve carbon films. The inner wall surfaces mean the surfaces of the partition walls 12, which substantially form the open space of the cells 13.

In a separation membrane-porous material composite 1, for example, when a mixture of water and ethanol as a target of separation is introduced into the cells 13 from an end face 15 on the inlet side, water constituting the mixture is selectively separated by the carbon films 66 formed on the inner wall surface of the cells 13, passes through the partition walls 12, and discharged from the outermost peripheral face 17 of the separation membrane-porous material composite 1 before the mixture reaches the end face 16 on the outlet side. That is, the mixture can be divided into water as a substance and ethanol as the other substance. Thus, the separation membrane-porous material composite 1 can be used as a filter having high separation performance for water and ethanol, for example.

As shown in Fig. 6, the separation membrane-porous material composite 1 is a composite having a porous material 61 (partition wall 12) and a carbon film 66 as a separation membrane formed on a surface of the porous material 61 (partition wall 12). The porous material 61 is constituted by a substrate 62 having an average particle diameter of 10 to 100 µm and an average pore diameter of 1 to 30 µm, an intermediate layer having an average pore diameter of 0.1 to 3 µm, and a dense layer 64 having an average pore diameter of 0.01 to 0.5µm from the inner side. A carbon film 66 is formed on the surface of the dense layer 64. A composite 65 is formed at the interface of the dense layer 64 (porous material 61) and a carbon film 66 and has a thickness of 0.00001 to 1 mm.

Next, a method for manufacturing a separation membrane-porous material composite will be described with an example of a case of manufacturing the aforementioned separation membrane-porous material composite 1. Through the description, a method for forming a separation membrane on a surface of a porous material of the present invention will be described. First, the porous material 61 is obtained by a know method. For example, a substrate 62 having a monolithic shape is formed by subjecting a porous material to extrusion forming, followed by firing. Then, an inter mediate layer 63 and a dense layer 64 are formed on a surface of the substrate 62 using a porous material by a filtration film-forming method, followed by firing to obtain a porous material 61. The surface of the substrate 62 where the intermediate layer 63 and the dense layer 64 are formed is an inner wall surface of a cell 13.

As the porous material for the substrate 62, alumina can be employed in that a pore diameter is hardly changed due to corrosion or temperature change and that sufficient strength can be obtained. In place of alumina, cordierite, mullite, silicon carbide, or the like, may be employed.

As the porous material for the intermediate layer 63 and the dense layer 64, the same material as that for the substrate 62 can be used. Particles, e.g., alumina particles forming the intermediate layer 63 has a smaller average particle diameter than that of the particles, e.g., alumina particles forming the substrate 62; and particles, e.g., alumina particles forming the dense layer 64 has a smaller average particle diameter than that of the particles, e.g., alumina particles forming the intermediate layer 63. When the intermediate layer 63 and the dense layer 64 are formed by a filtration film-forming method, each of the porous materials is used as slurry obtained by mixing framework particles of alumina particles or the like having a desired average particle diameter of 0.3 to 10 µm, a sintering aid of a glass frit powder, and binder with a solvent such as water at a predetermined ratio. It is desirable that the slurry has a binder content of 2 to 10% by mass with respect to contents of inorganic substances constituting slurry.

Next, a carbon film 66 (separation membrane) is formed on a surface of the porous material 61 obtained above. The surface of the porous material 61 where the carbon film 66 is formed is an inner wall surface of a cell 13 where the intermediate layer 63 and the dense layer 64 are previously formed and a surface of a partition wall 12. The carbon film 66 can be formed by bringing a precursor solution of a carbon film 66 into contact with a surface of the porous material 61 to form a film, which is carbonized at about 400 to 1000°C, preferably about 700°C in a nitrogen atmosphere. The carbonization may be performed in a reduced atmosphere of argon, helium, or the like, in a vacuum state instead of a nitrogen atmosphere. When the carbonization is performed at a temperature below 400°C, the selectivity and the permeability rate as a molecular sieve filmmay decrease because of insufficient carbonization. On the other hand, when the carbonization is performed at a temperature above 1000°C, the permeability rate may decrease because of shrinkage of pore diameters. The carbon film 66 may be formed at once or in repeated operations.

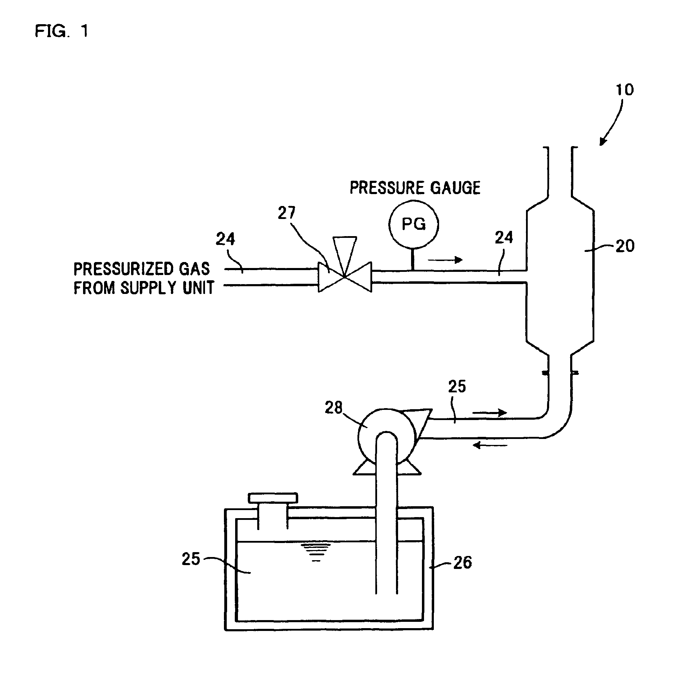

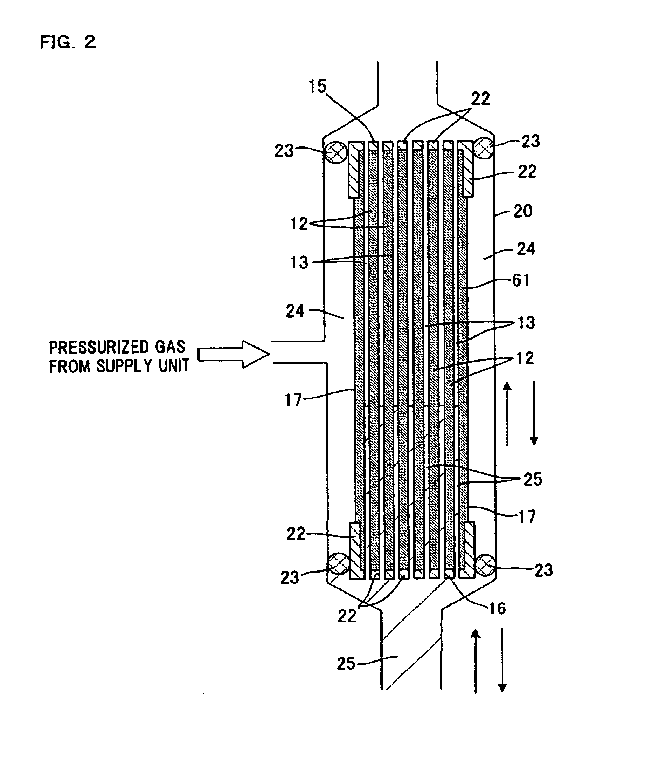

Figs. 1 and 2 are views showing an apparatus used for forming the carbon film 66 by an immersion method. Fig. 1 is a block diagram showing the entire machinery and tools, and Figure 2 is a detailed view showing the inside of the container shown in Figure 1. The apparatus 10 shown in Fig. 1 makes the same conditions as those for immersing the porous material 61 into a precursor solution 25. The apparatus 10 is constituted by a container 20 having the porous material 61 therein, a tank 26 storing the precursor solution 25, a pump 28 for supplying the precursor solution 25 from the tank 26 to the container 20, and a regulation valve 27 for adjusting pressure of pressurized gas 24 to be sent from a pressurized gas supply unit, which is not illustrated, to the container 20. As shown in Fig. 2, in the container 20 is housed the porous material 61 having the end faces 15 and 16, both sealed with a sealant 22 of glass material in the state that the end faces 15 and 16 are isolated from the peripheral face 17 by packings 23.

Using the apparatus 10 shown in Figs. 1 and 2, pressurized gas is charged into the pores of the porous material 61 by manipulating the regulation valve 27 in the state that the porous material 61 is housed in the container 20 as described above. The pressurized gas is charged under a pressure of 1 to 1000 kPa. This makes the pressure in the porous material 61 also about 1 to 1000 kPa even though a pressure loss is generated in the porous material 61. Then, the pump 28 is operated to supply the precursor solution 25 to the inside of the cells 13, for example, from the end face 16 side to the end face 15 side of the porous material 61 housed in the container 20. Then, the pump 28 is stopped to be opened or the pump 28 is adversely operated to remove the surplus precursor solution 25 from the cells 13. Thus, a thin film made of the precursor solution 25 which becomes a carbon film 66 later can be formed on the inner wall surface of the cells 13 (surface of the porous material 61). Since the inside of the pores of the porous material 61 is pressurized by the pressurized gas at this time, the precursor solution is inhibited from penetrating into the inside (the inside of the pores) of the porous material 61 (dense layer 64), and the composite layer 65 is not formed thick. The carbon film 66 containing the composite layer 65 portion is a flat thin film having a uniform thickness, and thereby a high separation factor can be obtained with inhibiting a flux from being reduced.

In order to form a carbon film 66 as a separation membrane, there may be employed, as a means to bring the precursor solution 25 into contact with a surface of the porous material 61, a means such as spin coating or spray coating instead of the immersion method. In the case that the porous material has a monolithic shape as the present embodiment, a carbon film can easily be formed by the immersion method. Here, the term "precursor" means a material capable of being converted into a separation membrane by, for example, firing the resultant after coating or immersion. Thus, in case of the carbon film, the precursor includes a thermosetting resin such as phenol resin, melamine resin, urea resin, furan resin, polyimide resin, and epoxy resin; a thermoplastic resin such as polyethylene; a cellulose resin, or a precursor substance of these resins.

Thus, a precursor solution 25 for the carbon film 66 may be prepared by dissolving any one of the above mentioned materials in an organic solvent such as methanol, acetone, tetrahydrofuran, NMP, and toluene; water, or the like. When a film of the precursor solution 25 is formed, according to the kind of the resin contained in the solution, an appropriate thermal treatment may be employed. As the pressurized gas 24, argon, helium, or nitrogen may be employed. Indeed, as an exemplified example for a solution of separation membrane, silica sol can be given. The precursor other than those for the carbon filmmay include rawmaterials for forming zeolite film by using hydrothermal synthesis after applying seed of zeolite onto the porous material.

In the present specification, the average pore diameter (µm) is measured by mercury penetration method. The average pore diameter is a value of a 50% particle diameter measured with an X-ray transmission type particle size distribution measuring apparatus (Sedigraph 5000-02 type produced by Shimazu Corporation in Example described below).

### Example

Hereinbelow, the present invention will be described in more detail on the basis of Examples. However, the present invention is by no means limited to these Examples.

### (Example 1)

There was manufactured a substrate having a monolithic shape having an average particle diameter of 10 to 100 µm and an average pore diameter of 1 to 30 µm though forming by extrusion and firing. Next, on the inner wall surface of the cells of the substrate, alumina particles having an average particle diameter of 0.3 to 10 µm were deposited by a filtration film-forming method, followed by firing to form an intermediate layer having a thickness of 10 to 1000 µm and an average pore size of 0.1 to 3 µm. On the intermediate layer, alumina particles having an average particle diameter of 0.3 to 1 µm were further deposited by a filtration film-forming method, followed by firing to form a dense layer having a thickness of 1 to 100 µm and an average pore diameter of 0.01 to 0.5 µm. Thus, a porous material was obtained.

Next, using the apparatus 10 shown in Figs. 1 and 2, helium gas having a pressure of 1 kPa was charged into the pores of the porous material, and, with pressurizing the inside of the pores, a precursor solution of a carbon film was formed on the inner wall surfaces of the cells of the porous material by an immersion method and carbonized at 700°C in a nitrogen atmosphere to further form a carbon film on the dense layer. Thus, a separation membrane-porous material composite was obtained.

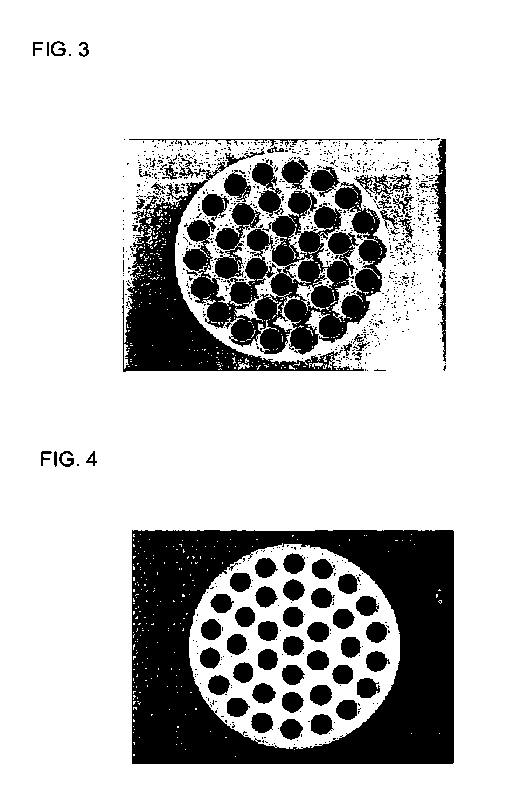

The separation membrane-porous material composite obtained above was evaluated by a water-ethanol pervaporation method. As the test conditions, a ratio of H₂O:EtOH was 10:90% by mass, and the supplied liquid had a temperature of 75°C. Table 1 shows the amount of consumption of the precursor solution used for forming the carbon film and pervaporation performance (a separation factor and flux). In addition, Fig. 4 shows a photograph of a cross-section of the porous material in the stage of forming the precursor solution of a carbon film on the inner wall surfaces of the cells of the porous material. In Example 1, two separation membrane-porous material composite bodies were manufactured under the same conditions, and Fig. 4 shows a photograph of a cross section of one of them.

### (Example 2)

A separation membrane-porous material composite was manufactured in the same manner as in Example 1 except that the inside of the pores was pressurized by helium gas having a pressure of 50 kPa and charged into the pores of the porous material. The separation membrane-porous material composite was evaluated by a water-ethanol pervaporation method under the same conditions as in Example 1. Table 1 shows the amount of consumption of the precursor solution used for forming the carbon film and pervaporation performance (a separation factor and flux).

### (Example 3)

A separation membrane-porous material composite was manufactured in the same manner as in Example 1 except that the inside of the pores was pressurized by helium gas having a pressure of 100 kPa and charged into the pores of the porous material. The separation membrane-porous material composite was evaluated by a water-ethanol pervaporation method under the same conditions as in Example 1. Table 1 shows the amount of consumption of the precursor solution used for forming the carbon film and pervaporation performance (a separation factor and flux).

### (Example 4)

A separation membrane-porous material composite was manufactured in the same manner as in Example 1 except that the inside of the pores was pressurized by helium gas having a pressure of 1000 kPa charged into the pores of the porous material. The separation membrane-porous material composite was evaluated by a water-ethanol pervaporation method under the same conditions as in Example 1. Table 1 shows the amount of consumption of the precursor solution used for forming the carbon film and pervaporation performance (a separation factor and flux).

### (Comparative Example 1)

Two separation membrane-porous material composite bodies were manufactured in the same manner as in Example 1 except that the inside of the pores was not pressurized a separation membrane was formed by penetrating the precursor solution. The separation membrane-porous material composite bodies were evaluated by a water-ethanol pervaporation method under the same conditions as in Example 1. Table 1 shows the amount of consumption of the precursor solution used for forming the carbon film and pervaporation performance (a separation factor and flux). In addition, Fig. 3 shows a photograph of a cross-section of the porous material in the stage of forming the precursor solution of a carbon film on the inner wall surfaces of the cells of the porous material. In Comparative Example 1, two separation membrane-porous material composite bodies were manufactured under the same conditions, and Fig. 3 shows a photograph of a cross section of one of them. As can be taken from Fig. 3, the presence of a blackish colored relatively thicker layer around the pores may be observable while the presence of the blackish colored thick layer around the pores is hardly observable in case of the cross section of the Fig. 4 mentioned above. This difference can bring a big improvement in the filtration performance.

### (Comparative Example 2)

A separation membrane-porous material composite was manufactured in the same manner as in Example 1 except that the inside of the pores was pressurized by helium gas having a pressure of 1500 kPa and charged into the pores of the porous material a separation membrane was formed by penetrating the precursor solution. The separation membrane-porous material composite was evaluated by a water-ethanol pervaporation method under the same conditions as in Example 1. Table 1 shows the amount of consumption of the precursor solution used for forming the carbon film and pervaporation performance (a separation factor and flux) .

**[Table 1]**

| | Applied Pressure (kPa) | Separation factor α H₂O/EtOH | Flux (kg/m²h) | Amount of consumption of precursor solution(g) |
|---|---|---|---|---|
| Example 1 | 1 | 200 | 0.9 | 2.0 |
| Example 2 | 50 | 2000 | 0.9 | 1.5 |
| Example 3 | 100 | 1200 | 1.0 | 1.2 |
| Example 4 | 1000 | 800 | 1.1 | 1.0 |
| Comp. Ex. 1 | 0 | 120 | 0.8 | 2.4 |
| Comp. Ex. 2 | 1500 | 40 | 1.0 | 0.9 |

### (Example 5)

Next, using the apparatus 10 shown in Figs. 1 and 2, helium gas having a pressure of 1 kPa was charged into the pores of the porous material, and, with pressurizing the inside of the pores, a precursor solution of a carbon film was formed on the inner wall surfaces of the cells of the porous material by an immersion method and carbonized at 700°C in a nitrogen atmosphere to further form a carbon film on the dense layer. Thus, a separation membrane-porous material composite was obtained.

### (Discussion)

As shown in the results of Examples 1 to 4 in Table 1, good separation performance was imparted to the separation membrane-porous material composite bodies manufactured by pressurizing the inside of the pores with charging pressurized gas having a pressure of 1 to 1000 kPa into the pores of the porous material upon forming a film by using the precursor solution. It is clear in comparison with separation performance of the separation membrane-porous material composite bodies manufactured by a conventional method without pressurization (Comparative Example 1). In addition, from the results of Examples 1 to 4, it can be understood that specifications of an obtained separation membrane-porous material composite where priority is given to a separation factor α or a flux can be adjusted by regulating the pressure. On the other hand, as shown by the results of Comparative Example 2, it is understood that good separation performance cannot be obtained when pressure in the pores is made too high. This is presumed that a portion having no carbon film is formed because of the low separation factor α and the low amount of consumption of the precursor solution.

### Industrial Applicability

A separation membrane-porous material composite described herein can widely be used for, for example, a filter for selectively separating a specific substance (e.g., gas) from a mixture of a plurality of substances (e.g., gas).

## Claims

1. A method for manufacturing a composite (1) comprising a porous material (61) and a separation membrane (66) formed on a surface of the porous material (61), wherein the separation membrane (66) is a molecular sieve carbon film; wherein, after preparing the porous material (61), the thus prepared porous material (61) is subjected to a step of bringing a precursor solution (25) which becomes the separation membrane (66) later into contact with a surface of the porous material (61) at least once in a state that pressure is applied to an inside of pores of the porous material (61) so as to control penetration of the precursor solution (25) into a part of the inside of the pores of the porous material (61),
and wherein the precursor solution (25) is carbonized;
whereby there is made a composite layer (65), with thickness at a predetermined level, in the form of a portion where both the material constituting the porous material (61) and the material for the separation membrane (66) are present in a mingled state at the interface between the porous material (61) and the separation membrane (66).

2. A method for manufacturing a composite (1) according to Claim 1, wherein the contact in said step is conducted by immersing the porous material (61) in the precursor solution (25) which becomes the separation membrane (66) later.

3. A method for manufacturing a composite (1) according to Claim 1 or 2, wherein pressure is applied by supplying pressurized gas (24) into the pores of the porous material (61).

4. A method for manufacturing a composite (1) according to any one of Claims 1 to 3, wherein the pressure is 1 to 1000 kPa.

5. A method for manufacturing a composite (1) according to any one of Claims 1 to 4, wherein the porous material (61) has a monolithic shape.

## Patentansprüche

1. Verfahren zur Herstellung eines Verbundmaterials (1), das ein poröses Material (61) und eine Trennmembran (66) umfasst, die auf einer Oberfläche des porösen Materials (61) ausgebildet ist, wobei die Trennmembran (66) ein Molekularsiebkohlenstofffilm ist; wobei nach der Herstellung des porösen Materials (61) das so hergestellte poröse Material (61) einem Schritt unterzogen wird, bei dem eine Vorläuferlösung (25), die später zu der Trennmembran (66) wird, mit einer Oberfläche des porösen Materials (61) zumindest ein Mal in einem Zustand in Kontakt gebracht wird, in dem Druck auf das Innere der Poren des porösen Materials (61) ausgeübt wird, um das Eindringen der Vorläuferlösung (25) in einen Teil des Inneren von Poren des porösen Materials (61) zu steuern,
und wobei die Vorläuferlösung (25) mit Kohlenstoff angereichert ist;
wodurch eine Verbundmaterialschicht (65) mit einer vorbestimmten Dicke in Form eines Abschnitts hergestellt wird, indem sowohl das Material, das das poröse Material (61) bildet, und das Material für die Trennmembran (66) vermischt an der Grenzfläche zwischen dem porösen Material (61) und der Trennmembran (66) vorliegen.

2. Verfahren zur Herstellung eines Verbundmaterials (1) nach Anspruch 1, worin der Kontakt in dem Schritt dadurch hergestellt wird, dass das poröse Material (61) in die Vorläuferlösung (25), die später die Trennmembran (66) wird, eingetaucht wird.

3. Verfahren zur Herstellung eines Verbundmaterials (1) nach Anspruch 1 oder 2, worin Druck dadurch ausgeübt wird, dass unter Druck stehendes Gas (24) in die Poren des porösen Materials (61) zugeführt wird.

4. Verfahren zur Herstellung eines Verbundmaterials (1) nach einem der Ansprüche 1 bis 3, worin der Druck 1 bis 1.000 kPa beträgt.

5. Verfahren zur Herstellung eines Verbundmaterials (1) nach einem der Ansprüche 1 bis 4, worin das poröse Material (61) eine monolithische Form aufweist.

## Revendications

1. Procédé de fabrication d'un composite (1) comprenant un matériau poreux (61) et une membrane de séparation (66) formée sur une surface du matériau poreux (61), dans lequel la membrane de séparation (66) est un film carbone de tamis moléculaire ; dans lequel, après préparation du matériau poreux (61), le matériau poreux ainsi préparé (61) est soumis à une étape de mise en contact d'une solution de précurseur (25) qui deviendra ultérieurement la membrane de séparation (66) avec une surface du matériau poreux (61) au moins une fois dans un état où une pression est appliquée à l'intérieur des pores du matériau poreux (61) afin de contrôler la pénétration de la solution de précurseur (25) dans une partie de l'intérieur des pores du matériau poreux (61),
et dans lequel la solution de précurseur (25) est carbonée ;
moyennant lequel on peut fabriquer une couche de composite (65), avec une épaisseur à un niveau prédéterminé, sous la forme d'une partie où le matériau constituant le matériau poreux (61) et le matériau pour la membrane de séparation (66) sont tous deux présents dans un état mélangé au niveau de l'interface entre le matériau poreux (61) et la membrane de séparation (66).

2. Procédé de fabrication d'un composite (1) selon la revendication 1, dans lequel le contact dans ladite étape est opéré en immergeant le matériau poreux (61) dans la solution de précurseur (25) qui deviendra ultérieurement la membrane de séparation (66).

3. Procédé de fabrication d'un composite (1) selon la revendication 1 ou 2, dans lequel la pression est appliquée en introduisant du gaz sous pression (24) dans les pores du matériau poreux (61).

4. Procédé de fabrication d'un composite (1) selon l'une quelconque des revendications 1 à 3, dans lequel la pression est de 1 à 1000 kPa.

5. Procédé de fabrication d'un composite (1) selon l'une quelconque des revendications 1 à 4, dans lequel le matériau poreux (61) a une forme monolithique.
